# EUROPEAN PATENT APPLICATION

(11) **EP 4 726 365 A1**
(43) Date of publication of application: **15.04.2026**
(21) Application number: 24206516.7
(22) Date of filing: 14.10.2024
(51) Int. Cl.: G01N 21/17, G01N 29/24

(54) **GAS IDENTIFICATION SYSTEM USING CANTILEVER-BASED PHOTO-ACOUSTIC SPECTROSCOPY**

(71) Applicant: Nederlandse Organisatie voor toegepast- natuurwetenschappelijk onderzoek TNO, 2595 DA 's-Gravenhage (NL)
(72) Inventor: CHENG, Lun-Kai, 2595 DA 's-Gravenhage (NL); VAN NEER, Paul Louis Maria Joseph, 2595 DA 's-Gravenhage (NL); HARMSMA, Peter Johan, 2595 DA 's-Gravenhage (NL); DE MEIJERE, Cornelis Adrianus, 2595 DA 's-Gravenhage (NL)
(74) Representative: V.O.

(57) **Abstract**

The present invention relates to a photo-acoustic spectroscopy gas cell designed for the identification of gases. The system comprises a gas chamber for containing a gas sample and a light receiving portion that receives excitation light capable of inducing a photo-acoustic effect in the contained gas. A cantilever is mounted at/within the gas chamber. The cantilever is specifically adapted with resonance characteristics that enable it to resonate in response to the photo-acoustic excitation generated within the gas cell. A measurement unit within the system is configured to analyze the response of the cantilever to the photo-acoustic effect, thereby determining the identification of the gas based on this response. This invention provides a precise and reliable way for gas analysis and identification

## Description

### FIELD OF THE INVENTION

The invention relates to a photo-acoustic spectroscopy gas cell. The invention also relates to a method for identifying a gas using the photo-acoustic effect. Furthermore, the invention relates to a system or device that includes the photo-acoustic spectroscopy gas cell. Also, the invention relates to the use of the photo-acoustic spectroscopy gas cell in a system or device for identifying a gas.

### BACKGROUND TO THE INVENTION

In the field of gas detection, particularly for trace gases in sensitive applications such as hydrogen fuel cells, highly sensitive and precise measurement technologies are desired. Photoacoustic spectroscopy (PAS) has been recognized as an effective technique for detecting low concentrations of gaseous contaminants. This method exploits the photoacoustic effect, wherein modulated light absorbed by a gas sample induces acoustic waves due to thermal expansion. These acoustic waves are then detected and analyzed to determine the presence and concentration of specific gas species.

However, the effectiveness of conventional PAS systems is limited by several factors. First, most systems rely on electrical microphones or tuning forks to detect the acoustic signals. These elements can be insufficiently sensitive for detecting extremely low gas concentrations required in high-purity applications, such as in PEM hydrogen fuel cells where contaminants like CO and H2S must be detected at concentrations as low as a few parts per billion (ppb). There is a strong need for advancements in detection capabilities to meet these stringent requirements.

Moreover, the traditional PAS systems often involve complex and bulky setups. This not only increases the operational complexity and cost but also limits the system's practicality for inline or field applications. Additionally, the typical PAS setup uses narrow-diameter gas tubes to enhance the pressure amplitude of the acoustic signal. This design choice inherently restricts the enhancement techniques that can be applied.

The existing limitations present a clear need for a novel approach to gas detection that addresses the issues of sensitivity, selectivity and/or system complexity.

### SUMMARY OF THE INVENTION

It is an object of the invention to provide for a method and a system that obviates at least one of the above mentioned drawbacks.

Additionally or alternatively, it is an object of the invention to provide for an improve photo-acoustic spectroscopy gas cell.

Additionally or alternatively, it is an object of the invention to provide an enhanced method for identifying a gas using the photo-acoustic effect.

Additionally or alternatively, it is an object of the invention to reduce operational complexity while improving the ability to detect multiple gases with a single excitation source.

Thereto, the invention provides for a photo-acoustic spectroscopy gas cell comprising: a gas chamber configured to contain a gas sample; a light receiving portion configured to receive excitation light at a modulation frequency that induces a photo-acoustic effect in the gas within the gas chamber; a cantilever mounted at/within the gas chamber, wherein resonance characteristics of the cantilever are adapted to allow it to resonate in response to photo-acoustic excitation within the gas cell; and a measurement unit configured to determine the identification of the gas based on a response of the cantilever to the photo-acoustic effect.

By utilizing the cantilever's resonance, which is specifically adapted to the photo-acoustic excitation frequency, the system achieves high sensitivity and specificity in gas identification, making it suitable for applications requiring precise trace gas analysis. The excitation light at the modulation frequency can be provided with an excitation light source with amplitude and/or wavelength modulation. The wavelength of the excitation light source can be matched with the absorption wavelength of the gas.

A cantilever, when properly configured and incorporated within a gas cell, can be tuned to have a natural frequency that matches or is harmonically related to the frequency of the excitation light used in photo-acoustic spectroscopy. The resonance characteristics refer to the cantilever's ability to oscillate with larger amplitudes at specific frequencies, known as its resonant frequencies.

In operation, the wavelength of the excitation light directed into the gas chamber can be specifically selected to correspond to the absorption spectrum of the target gas species contained within the chamber. This selection ensures efficient absorption of the light by the target gas. The modulation frequency of the excitation light can be precisely tuned to coincide with the natural resonance frequency of the cantilever mounted within the gas chamber. This tuning facilitates optimal resonance of the cantilever in response to the acoustic waves generated by the photo-acoustic effect, thus maximizing the sensitivity and accuracy of the measurement unit in identifying the gas species based on the characteristic response of the cantilever.

When the excitation light with a particular modulation frequency (matched to the absorption spectra of the target gas) is directed onto a gas sample, it causes the gas molecules to absorb light energy and subsequently release this energy as heat. This process results in rapid thermal expansion and contraction of the gas, generating pressure waves or acoustic signals within the gas chamber. If the modulation frequency of these pressure waves aligns with the resonance frequency of the cantilever, the cantilever will oscillate at its maximum amplitude due to resonance. This resonance amplifies the response of the cantilever to the acoustic signals, making even small acoustic effects detectable.

This amplified response can be important for detecting trace amounts of gases. In environments where the concentration of a specific gas is extremely low, the acoustic signals generated may be weak. The resonant enhancement provided by the cantilever allows these weak signals to be converted to a cantilever response sufficiently for detection and measurement, which would otherwise be below the sensitivity threshold of non-resonant detection systems.

The cantilever may be configured such that its resonance frequency is tailored to match the modulation frequency of the excitation light, which is equal tothe frequency of the acoustic signals generated by the photo-acoustic effect. This ensures that the cantilever is most responsive to the specific acoustic signals that correlate with the photo-acoustic excitation from the target gas at the chosen frequency.

The modulation frequency of the excitation light source may be selected such that it is equal to the frequency of the acoustic waves generated within the gas chamber due to the photo-acoustic effect. The excitation light source can be configured to emit light at a wavelength that corresponds to an absorption line of a specific gas targeted for detection within the gas sample. By selecting the wavelength of the excitation light to match an absorption line of the particular gas, the system ensures that the energy from the excitation light is preferentially absorbed by that gas species. This selective absorption leads to a stronger photo-acoustic effect for the target gas compared to other gases present in the sample, thereby enhancing the specificity of the gas detection method.

The cantilever can be configured such that a resonance frequency thereof matches a modulation frequency of the excitation light.

In photo-acoustic spectroscopy, excitation light is modulated at specific frequencies and directed into a gas sample. This induces periodic thermal expansions and contractions in the gas, generating sound waves via the photo-acoustic effect. The cantilever in the gas cell, which is a sensitive mechanical component, reacts to these sound waves. By configuring the cantilever such that its resonance frequency matches the modulation frequency of the excitation light, the cantilever is made to resonate most effectively in response to the induced sound waves.

The cantilever may exhibit a significantly larger amplitude of oscillation at its resonance frequency when subjected to periodic forces at that frequency. Hence, the cantilever's mechanical response to the acoustic signals generated by the photo-acoustic effect can be improved. The cantilever's increased amplitude of response to the acoustic signals directly translates to enhanced sensitivity. With the cantilever operating at its resonance frequency, the signal (cantilever's response) is amplified relative to background noise. This amplification aids in clearer signal detection (cf. improved signal-to-noise ratio), which can be important for accurate gas analysis.

Optionally, the measurement unit comprises an optical waveguide sensor configured to measure the response of the cantilever to the acoustic pressure within the gas cell generated as a result of the photoacoustic effect.

Incorporation of an optical waveguide sensor in the measurement unit allows for precise and non-invasive measurement of the cantilever's response to acoustic pressures. An optical waveguide sensor may include waveguide elements such as fiber Bragg gratings, ring resonators, fiber interferometer, Fabry-Perot fiber cavity or integrated optical waveguide with an interrogation system that can detect changes in light properties like intensity, phase, or wavelength of light from the waveguide element. These changes are induced by mechanical deformations caused by acoustic pressures within the gas cell.

In the gas cell, the cantilever is exposed to acoustic waves generated by the photo-acoustic effect when the gas absorbs modulated light and undergoes thermal expansion and contraction. This rapid thermal response creates pressure waves within the gas chamber that cause the cantilever to vibrate and/or deflect. The optical waveguide sensor is configured to measure these vibrations or deflections. It can be achieved through several mechanisms.

Optionally, a surface-mounted optical waveguide sensor is attached to the cantilever.

Changes in the length, shape or position of the cantilever may alter the optical path length in an interferometric setup within the fiber, resulting in measurable phase shifts of the interference signal. Furthermore, if FBGs mounted on the cantilever are used, the strain induced in the fiber by the cantilever's movement alters the grating period, shifting the wavelength of the reflected light. Changes in the physical dimensions of ring resonators due to mechanical strain can affect the resonant frequency of light circulating within the ring, changing its optical properties.

The attachment of a surface-mounted optical waveguide sensor (directly) to the cantilever allows for direct and localized sensing of cantilever deformations, translating mechanical strains into optical signals without the need for external measurement setups For example, this arrangement bypasses the need for additional mechanical-to-electrical transduction components typically required to measure such deformations. Optical waveguide sensors, such as Fiber Bragg Gratings (FBGs), Fabry-Perot cavity or integrated optical chips, are inherently sensitive to changes in strain and can detect minute deformations in the cantilever. These deformations alter the optical properties of the waveguide (e.g., refractive index, path length), which are then precisely measured using optical techniques.

Optical sensors can measure very small changes in the optical path length, which translates to detecting tiny deformations in the cantilever. This high degree of measurement precision leads to more accurate gas identification, as the system can differentiate between the subtle effects various gases have on the cantilever's motion.

Optionally, the optical waveguide sensor comprises at least one of: a fiber grating unit, a ring resonator unit, a Fabry-Perot cavity, or a fiber laser unit, configured to detect the response of the cantilever by measuring strain or deformation induced changes in optical properties.

The use of optical components such as fiber grating units, ring resonators, Fabry-Perot cavities, or fiber lasers allows for highly sensitive detection of strain or deformation, leveraging the specific optical properties of these components to enhance signal clarity and detection limits.

A fiber grating unit may include a segment of optical fiber that has been modified to include a series of periodic or aperiodic variations in its refractive index, creating what is known as a Bragg grating. When light is transmitted through the fiber, these gratings reflect specific wavelengths while allowing others to pass. As the fiber experiences strain or deformation (such as those induced by the vibrations of the cantilever in response to acoustic pressures), the periodicity of the gratings changes, thereby shifting the wavelengths they reflect. This wavelength shift is directly measurable and can be correlated precisely to the amount of strain experienced by the fiber. Similar spectral wavelength response effect can be achieved by special fiber grating based devices like phase-shifted Fiber Bragg Grating (PS-FBG) or Long Period Grating (LPG), multi-sections FBG, grating with multiple periodicities etc.

A ring resonator is a loop of optical waveguide configured to resonate at particular optical wavelengths. When light passes through the resonator, it circulates multiple times, creating constructive interference at the resonant optical frequencies. Any deformation or strain in the cantilever to which the resonator is attached will alter the physical path length of the resonator, thus changing its resonant optical frequency which is directly related to the optical wavelength. This change can be detected as a shift in the light output from the resonator, providing a sensitive measure of the cantilever's motion.

Fabry-Perot interferometers use the principle of multiple beam interference between two highly reflective reflectors. This can be constructed in optical waveguide. When mounted on a deformable cantilever for example, any strain-induced changes in the distance between these reflectors modify the interference pattern of light transmitted through or reflected by the interferometer. By analyzing these changes, the Fabry-Perot interferometer can provide highly precise measurements of the cantilever's deformation, directly linking mechanical displacement to changes in detected light patterns.

In a fiber laser, a segment of an optical fiber may be doped to act as the gain medium. For example, it may be doped with rare-earth elements (such as erbium or ytterbium). Two reflectors at the ends of the fiber form a resonant cavity that allows for light amplification by stimulated emission. When the fiber is strained or deformed, the properties of the laser's optical cavity change, specifically the cavity length and the gain characteristics. This results in a change in the laser's output wavelength or intensity, which can be precisely measured and used to monitor the cantilever's behavior.

By converting mechanical movements into optical signals at the measurement location, the need for mechanical-to-electrical transduction (which can introduce noise due to electro-magnetic interference and reduce fidelity) is eliminated. This enables installing of the electronics of the system in a proper packaging at a well isolated location for enhancing the clarity and reliability of the measurements. These optical sensing methods allow for localized measurements along the cantilever, providing detailed information about the distribution and intensity of strain along its length.

Optionally, the optical waveguide sensor is configured to measure changes in an optical path length.

By measuring changes in optical path length via interferometry, the gas cell can accurately detect tiny deformations in the cantilever, which may be indicative of the presence and concentration of specific gases. The conversion of mechanical deformations into changes in the optical path allows for a precise quantification of these changes. The data collected is not only more precise but also enables a robust analysis due to the high resolution of optical measurements. With enhanced sensitivity and precision, the system can analyze gases at lower concentrations or detect gases that cause only minor acoustic effects upon absorption of light.

Optionally, the optical waveguide sensor is configured to measure its length change interferometrically.

The optical waveguide sensor may include components such as fiber optics that can detect changes in length through optical interferometry. Interferometry is a highly sensitive measurement technique that exploits the principle of superposition of waves. Light from a coherent source (usually a laser) is may be split into two paths, one travels through the optical waveguide (sensor path) and another serves as a reference. The light in the sensor path interacts with the cantilever. As the cantilever deforms due to the photo-acoustic effect, it alters the path length that the light travels within the optical waveguide. The light from both paths can be recombined to produce an interference pattern. Any change in the path length caused by deformation of the cantilever results in a phase shift of the interference signal. The advantage of using optical interferometry lies in its sensitivity to changes in path length. Even sub-wavelength changes in the optical path can be detected. This capability can be important when dealing with photo-acoustic effects, which may only induce very slight mechanical responses in the cantilever, especially when analyzing trace gases or gases that produce subtle acoustic signals.

Optionally, the optical waveguide sensor includes reflectors at both ends, and the system comprises an interferometer configured to measure changes in an interference pattern resulting from the reflections, correlating these changes with variations in cantilever strain or deformation.

By incorporating reflectors at both ends of the optical waveguide sensor and using an interferometer, an enhanced sensitivity of dual-ended reflections can be leveraged in order to improve the detection of phase changes. This setup can intensify the interferometric sensitivity to cantilever movements, enhancing the measurement's precision and reliability. The dual reflector system multiplies the effects of minute deformations, translating them into larger changes in the interference pattern, which significantly improves the detection capabilities for various gas species.

Optionally, the optical waveguide sensor includes a partial reflector at the end of the waveguide to transmit the light for the optical measurement to the cantilever which acts as a second reflector, wherein light reflected by the cantilever is recoupled into the waveguide sensor for interferometrical measurement.

In some examples, the optical measurement is enhanced by integrating a partial reflector and utilizing the cantilever itself as a secondary reflecting surface, thus optimizing the path of the optical signal for precise measurement. The partial reflector design allows part of the light to be transmitted and reflected back from the cantilever, capturing dynamic changes in the cantilever's position with high fidelity. This configuration amplifies the sensitivity of the measurement, enabling finer detection of gas-induced cantilever movements through enhanced interferometric analysis.

Optionally, the cantilever is clamped within the gas chamber without active actuation and/or drive mechanisms.

The gas cell design can be simplified by employing a passive operation, in which the clamped cantilever operates without the need for active driving mechanisms, reducing mechanical complexity and potential points of failure. The passive suspension of the cantilever ensures a response to acoustic pressures at the selected frequency, reducing effects by external mechanical influences.

The resonant cantilever can provide for a dedicated, stable and reliable measurement of gas characteristics, improving the device's operational longevity and reducing maintenance requirements.

In a passively suspended setup, the cantilever's response to the photo-acoustic effect is solely dependent on the acoustic pressures generated by the interaction of the excitation light with the gas molecules. This response is more natural and unmediated by external forces or adjustments when operating at resonance. Such a direct and unaltered response ensures that the measurements are solely indicative of the gas characteristics and not influenced by any external mechanical adjustments.

Systems with fewer mechanical and electronic components generally require less maintenance and less susceptible to ElectroMagnetic Interference. This is particularly advantageous in settings where the gas cell must operate continuously or in remote or harsh environments. The passive optical waveguide sensor is less prone to disruptions caused by component failures, thereby reducing downtime and maintenance costs.

The enhanced vibrational amplitude at resonance means that even small variations in acoustic pressure, such as those produced by different gases absorbing light at specific wavelengths, result in larger, more detectable movements of the cantilever's tip. This sensitivity can be important for detecting low concentrations of gases or gases that produce weak acoustic signals due to low absorption coefficients.

Furthermore, with active driving, the system can be adjusted in real-time or configured prior to measurements to target specific gases more effectively, accommodating changes in environmental conditions or measurement requirements. This flexibility improves the practical utility of the gas cell across different applications and conditions.

Optionally, the cantilever is operated at or close to a resonance frequency thereof.

This approach can increase the signal-to-noise ratio, allowing for the detection of lower concentrations of gases. By operating the cantilever at or near its resonance frequency, the effect of the induced photo-acoustic waves may generate a stronger response of the waveguide sensor. Hence, the effect may be more pronounced as a result of relatively smaller stimuli.

The quality factor, Q, of a cantilever, which is a dimensionless parameter, describes the damping of the system. A higher Q indicates less energy loss relative to the stored energy, typical at resonance. Operating near resonance minimizes the energy dissipated per cycle, maintaining a higher amplitude response for longer periods.

Operating at resonance improves the SNR by amplifying the true signal relative to the background noise. Since the cantilever movement is more substantial at resonance, the detection system (e.g., optical waveguide sensors) can more easily discriminate between the signal caused by genuine acoustic effects of gases and any other spurious mechanical or thermal noises.

The enhanced sensitivity and SNR make it possible to detect lower concentrations of gases.

Optionally, the cantilever is configured to operate in a resonance mode, in which its physical characteristics, including shapes, material properties, clamping and/or dimensions, are tailored to allow it to resonate at frequencies that match or are closely aligned with the modulation frequency of the excitation light for photo-acoustic excitation.

Customizing the cantilever's physical properties to align with the excitation light's modulation frequency ensures that the cantilever is perfectly attuned to the specific energies involved in the photo-acoustic effect, optimizing its mechanical response. This tailored design allows the cantilever to respond more robustly and specifically to the excitation frequencies used, improving the accuracy and efficiency of gas detection. The precise alignment of mechanical and optical properties facilitates enhanced detection capabilities, particularly for complex mixtures of gases.

The shape of the cantilever influences its stiffness and mass distribution, which in turn affect its resonant frequencies. For example, a longer and thinner cantilever will generally have a lower resonant frequency compared to a shorter and thicker one. Different materials have varying densities and elastic moduli, influencing the cantilever's natural frequency. Selecting a material with the right elasticity and density ensures that the cantilever can resonate at desired frequencies that match the acoustic signals produced by different gases. How the cantilever is mounted (clamping) and its dimensions (length, width, thickness) directly impact its frequency response. Precise engineering of these factors allows the cantilever to achieve resonance at frequencies that are closely aligned with the modulation frequency of the excitation light used in the gas cell.

By customizing the cantilever to resonate specifically at the excitation light's modulation frequency, the system ensures that the cantilever's response is highly sensitive to the photo-acoustic effect. This optimization of resonance enhances the mechanical response by maximizing the amplitude of vibration in response to the acoustic waves generated when the gas absorbs the light. This can be important because a stronger vibration translates to a clearer and more detectable signal.

Optionally, the cantilever is integrated and clamped within an interior space of the gas chamber, and wherein the gas chamber is sealable in order to prevent gas or pressure leakage.

Integrating and securely clamping the cantilever within a sealable gas chamber minimizes external influences and potential contaminants, ensuring that the measurements are solely responsive to the gas sample within the chamber. This configuration provides a controlled environment for the photo-acoustic interactions, leading to more reliable and repeatable measurements.

The controlled environment achieved by the sealable design of the gas chamber ensures that the photo-acoustic effect within the chamber is the sole factor influencing the cantilever's movement. When the chamber is sealed, variations in external pressure or gas composition are effectively isolated from the internal environment where the gas analysis occurs. This isolation can be important because even minor changes in external pressure can alter the density and acoustic properties of the gas inside the chamber, thereby affecting the photo-acoustic response and leading to inaccuracies in the gas identification process.

According to an aspect, the invention provides for a method for identifying a gas, comprising: introducing a gas sample into a gas chamber of a photo-acoustic spectroscopy gas cell; directing excitation light at a modulation frequency into the gas chamber, wherein the modulation frequency of the excitation light is selected to induce a photo-acoustic effect in the gas; monitoring a response of a cantilever mounted at/within the gas chamber, wherein the resonance characteristics of the cantilever are adapted to allow it to resonate in response to photo-acoustic excitation within the gas cell; measuring the response of the cantilever to the photo-acoustic effect using a measurement unit; and determining the identification of the gas based on the measured response of the cantilever.

The cantilever is designed to resonate in response to the excitation within the gas cell. This means that the mechanical resonance frequency of the cantilever is matched with the modulation frequency of the excitation source, which is typically a laser modulated at acoustic frequencies. This matching is important because it maximizes the energy transfer from the acoustic pressure changes within the gas cell to the mechanical deformation of the cantilever which is detected by the optical waveguide sensor.

By operating the cantilever at its resonance frequency, the system achieves a maximum mechanical response. This is due to the nature of resonant systems where the response amplitude is significantly amplified at the resonance frequency. This leads to a larger mechanical signal, enhancing the sensitivity and effectiveness of the measurement.

In some examples, the resonant cantilever is used in conjunction with surface-mounted optical waveguide technology, such as fiber Bragg gratings, fiber interferometer, Fabry-Perot cavity or ring resonators, to detect and measure the deformation of the cantilever. This setup allows the photoacoustic effect to be quantified more accurately, as the optical sensors can detect minute changes in the cantilever's position, shape or structure due to the resonance.

The cantilever can be designed with flexibility regarding its mechanical properties and the setup of the optical sensing units. This flexibility allows for optimization based on specific application requirements, including the size of the gas cell and the type of gases being analyzed.

Overall, the resonance characteristics of the cantilever are adapted to enhance the measurement accuracy and sensitivity of the photoacoustic spectroscopy system by ensuring that the cantilever's resonance frequency is appropriately matched with the modulation frequency of the excitation light source. This optimization allows for more effective conversion of acoustic pressure changes within the gas cell into measurable mechanical signals.

Optionally, multiple cantilevers can be coupled together, either in the same or different configurations. In this way, the measurement sensitivity can be enhanced and/or simultaneous identification/detection/characterization of multiple gases can be allowed.

Optionally, the cantilever may include a free-hanging design, where it is not mechanically driven but responds passively to changes in pressure frequency that match its resonance frequency.

Optionally, configurations may include surface-mounted optical waveguide technologies to directly measure displacement or strain induced by cantilever deformation.

Optionally, the cantilever and optical waveguide technologies can be integrated into the gas cell design to provide a compact and efficient sensing unit.

It will be appreciated that any of the aspects, features and options described in view of the photo-acoustic spectroscopy gas cell apply equally to the method, system and the described device. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a photo-acoustic spectroscopy gas cell;
Fig. 2a, 2b show a schematic diagram of an embodiment of a photo-acoustic spectroscopy gas cell;
Fig. 3 shows a schematic diagram of an embodiment of a system;
Fig. 4a, 4b show a schematic diagram of an embodiment of a photo-acoustic spectroscopy gas cell;
Fig. 5a, 5b show a schematic diagram of an embodiment of a photo-acoustic spectroscopy gas cell;
Fig. 6 shows a schematic diagram of an embodiment of a photo-acoustic spectroscopy gas cell;
Fig. 7 shows a schematic diagram of an embodiment of a photo-acoustic spectroscopy gas cell;
Fig. 8 shows a schematic diagram of a method for a graph;
Fig. 9 shows a schematic diagram of an embodiment of a cantilever; and
Fig. 10 shows a schematic diagram of an embodiment of a photo-acoustic spectroscopy gas cell.

### DETAILED DESCRIPTION

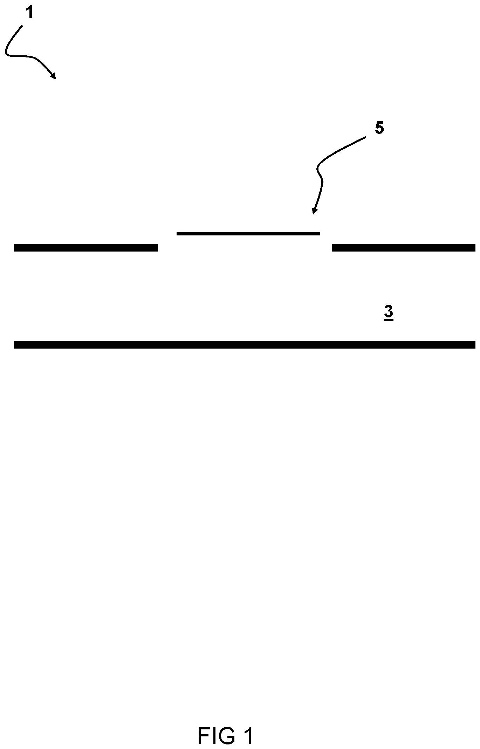

Fig. 1 shows a schematic diagram of an embodiment of a photo-acoustic spectroscopy gas cell 1. The gas cell 1 comprises a gas chamber 3 configured to contain a gas sample. A light receiving portion is provided that is configured to receive excitation light at a modulation frequency that induces a photo-acoustic effect in the gas within the gas chamber 3. A cantilever 5 is mounted within/at the gas chamber 3, wherein resonance characteristics of the cantilever 5 are adapted to allow it to resonate in response to photo-acoustic excitation within the gas cell 1. An optical waveguide technology based measurement unit is configured to determine the identification of the gas based on a response of the cantilever 5 to the photo-acoustic effect.

The mounting of the cantilever 5 within or at the gas chamber 3 is important for the detection and measurement of photo-acoustic effects induced by the excitation light. Specifically, "within/at" refers to the installation location of the cantilever 5 such that it is either entirely within the confines of the gas chamber 3 or positioned at an opening or a boundary of the gas chamber 3. This placement ensures optimal exposure of the cantilever 5 to acoustic waves generated within the gas chamber 3 due to the photo-acoustic effect.

In certain embodiments, the cantilever 5 may be arranged at a cavity adjacent to the gas chamber 3. This cavity is configured to facilitate the direct transmission of acoustic waves from the gas chamber 3 to the cantilever 5, thereby enhancing the sensitivity and precision of the gas identification process. The placement of the cantilever 5 in proximity to, but not necessarily within, the gas chamber 3 allows for a more robust and isolated setup, minimizing potential interference.

In some examples, the gas chamber 3 may include an opening through which the cantilever 5 is installed. This opening may be configured to maintain a precise gap between the cantilever 5 and the edges of the gas chamber 3. The size of this gap may be configured to be smaller than 1 millimeter, preferably smaller than 0.5 millimeters, and more preferably smaller than 0.25 millimeters. Such a minimal gap may be important to ensure that the acoustic waves impacting the cantilever 5 do so with minimal loss of energy, thereby maximizing the resonance and response of the cantilever 5 to the photo-acoustic effects within the gas chamber 3. Such a configuration may contribute significantly to the enhancement of the measurement accuracy and the efficiency of the gas identification process, leveraging the precise mechanical response characteristics of the cantilever 5 to detect minute changes in the acoustic environment within the gas cell 1.

In specific embodiments of the gas cell design, the air gap between the cantilever 5 and the internal walls of the gas chamber 3 is configured to be between 10 micrometers and 100 micrometers. This specific dimensional range can be important to achieving improved sensitivity in the detection and measurement of photo-acoustic effects. An air gap narrower than 10 micrometers may result in increased viscous drag exerted upon the cantilever 5, thereby decreasing its quality factor (Q) and diminishing its responsiveness to acoustic stimuli. Conversely, an air gap exceeding 100 micrometers may lead to acoustic leakage, wherein a significant reduction in the amplitude of sound waves reaching the cantilever 5 occurs, thus potentially impairing the device's sensitivity and precision. This defined air gap ensures that the cantilever 5 operates within an enhanced regime of acoustic coupling, thereby enhancing the gas identification process through precise resonance and response characteristics.

In some examples, the cantilever 5 may be configured in various shapes and materials to tailor its resonance characteristics to specific gases and photoacoustic signal excitation conditions.

In the shown figure, one cantilever 5 is shown. In some examples, multiple cantilevers are employed. For example, in some examples, multiple cantilevers 5, each tuned to different resonance frequencies or designed for different gases. This multi-cantilever approach would allow simultaneous detection and identification of multiple gas types within a single sample. Each cantilever could be individually read out, or their responses could be integrated to provide a comprehensive analysis of the gas mixture.

The cantilever 5 is designed to operate at a specific resonance frequency that is closely aligned or matched with the modulation frequency of the excitation light used in the PAS system. This alignment is important as it ensures that the cantilever's mechanical vibrations are maximally responsive to the acoustic signals generated by the photo-acoustic effect within the gas cell.

The excitation light is modulated at a frequency that induces the photo-acoustic effect, generating sound waves within the gas chamber. By aligning the cantilever's resonance frequency with this modulation frequency, the system can exploit the mechanical resonance of the cantilever to amplify the acoustic response, thereby enhancing the sensitivity and accuracy of the gas detection.

This alignment between the cantilever's resonance frequency and the excitation light's modulation frequency is important for achieving high-quality measurements. It allows the system to achieve a higher Q-factor (quality factor), which is indicative of a more selective and sensitive resonance response. This higher Q-factor results in larger deformations for the same input energy, translating into more precise measurements of gas concentrations using the optical waveguide sensor.

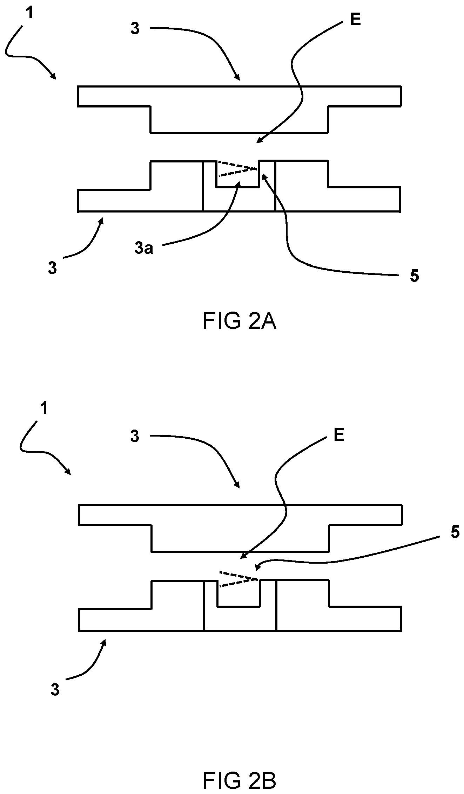

Fig. 2a, 2b shows a schematic diagram of an embodiment of a photo-acoustic spectroscopy gas cell 1. These figures illustrate the exemplary arrangement and operational positioning of the cantilever at/within a cavity 3a of the gas chamber. The cantilever 5 is configured to resonate in response to the photo-acoustic effect E generated by excitation light when it interacts with the gas sample contained within the gas chamber 3. The cantilever 5 is schematically illustrated at two positions (upward and downward deflected). The cantilever, as it is affected by the photoacoustic effect, will swing downwards and subsequently back upwards. In this exemplary configuration, the cantilever is shown positioned parallel to the base of the cavity. This illustrates the cantilever's placement relative to other structural elements of the gas cell 3, ensuring it is appropriately located to detect and respond to acoustic pressures generated within the gas chamber 5.

The cantilever 5 is arranged at different positions in figs. 2a, 2b. The cavity within the gas chamber 5 may be configured to allow movement and specific positioning of the cantilever. The exemplary arrangement allows the cantilever to act as a sensitive detector for the measurement unit, which identifies the gas type based on the resonance characteristics of the cantilever as it responds to the photo-acoustic effect.

In some examples, the gas cell is a gas resonator tube.

In some examples, a free-space fiber-based interferometer is used for optical readout of the resonant cantilever 5. This setup may involve directing a coherent light beam, such as a laser, to reflect off the surface of the cantilever. The reflected light interferes with a reference beam within the fiber interferometer setup. Any displacement or vibration of the cantilever causes a change in the phase of the interference signal, which can be precisely measured.

In some examples, multiple resonant cantilevers are linked to a single gas cell to enhance detection capabilities. This configuration allows for simultaneous monitoring of multiple frequencies or gas species by utilizing different cantilevers, each effectively tuned to a specific resonance frequency associated with a distinct trace gas. By coupling these cantilevers with a single gas cell, the setup maximizes the sensitivity and specificity of the detection system, enabling more precise and comprehensive analysis of gas mixtures. This approach also improves the overall signal-to-noise ratio by aggregating the responses from multiple sensors, leading to more reliable and robust gas detection.

The resonant cantilever in the photo-acoustic spectroscopy (PAS) gas cell represents a departure from known systems with a tuning fork design. The resonant cantilever according to the disclosure is designed to operate at specific resonance frequencies that are matched with the modulation frequencies of the excitation light used in PAS. This matching is critical because it maximizes the mechanical response of the cantilever to the photo-acoustic effects induced within the gas chamber. The high quality factor (Q) of the cantilever, indicative of its ability to maintain oscillatory motion with minimal energy loss, significantly amplifies the acoustic signal induced vibration of the cantilever. This is a stark contrast to traditional tuning fork designs, which typically do not operate at their resonance frequencies within PAS systems. Tuning forks generally have a lower Q-factor and are not primarily designed to enhance their response via resonant amplification of the acoustic signal, thus limiting their sensitivity and specificity in detecting minute gas concentrations.

Unlike the piezoelectric or electrically-based readout systems often associated with tuning forks, the cantilever according to the disclosure can use optical waveguide technology for detecting its motion. This integration includes options such as fiber Bragg gratings, fiber-based interferometer, ring resonators, or fiber lasers, which are capable of measuring the strain or deformation induced by the cantilever's motion with high precision. These sensors convert mechanical movements into measurable optical signals, allowing for highly sensitive and interference-resistant detection. The use of optical waveguide technology not only enhances sensitivity due to its high resolution but also mitigates issues related to electromagnetic interference, which can affect electrical readouts.

The system can be configured such that any electronics susceptible to electromagnetic interference (EMI) are strategically placed in locations where EMI exposure is minimized or where proper shielding or isolation can be applied. By positioning the EMI-sensitive electronic components in areas with minimal electromagnetic disturbances or enclosing them within appropriately shielded housings, the system effectively reduces the risk of EMI-induced signal disruptions. This configuration enhances the overall reliability and accuracy of the gas detection apparatus by ensuring that external electromagnetic fields do not interfere with the sensitive measurement electronics. Moreover, isolating the EMI-prone electronics allows for cleaner signal acquisition and processing, leading to improved signal-to-noise ratios and more precise identification and quantification of gas species within the gas chamber. This strategic placement and protection of electronic components contribute to the robustness and efficacy of the photo-acoustic spectroscopy system with only optical components around the gas cell for application in various operational environments.

The cantilever can be integrated directly within the gas chamber, allowing it to interact more intimately with the acoustic pressure waves generated by the photo-acoustic effect. This arrangement facilitates a direct and immediate response to pressure changes, in contrast to tuning forks, which may be positioned in a manner where mechanical coupling to the gas cell is less efficient, for example because the tuning fork, due to its size, at least partially extends outside of the chamber. The cantilever's design is tailored to optimize its responsiveness to specific gases by adjusting its physical characteristics such as shape, material properties, and dimensions, further enhancing its capability to differentiate between various gas species based on their acoustic signatures.

The cantilever's advantageously enables to detect dynamic pressure variations within the gas chamber at a high resolution. By configuring the cantilever to resonate in harmony with these variations, the system can accurately monitor the acoustic signals generated by different gases. This dynamic monitoring may be of great importance for example in applications where gas compositions quickly change, requiring rapid and precise analysis to detect contaminants effectively.

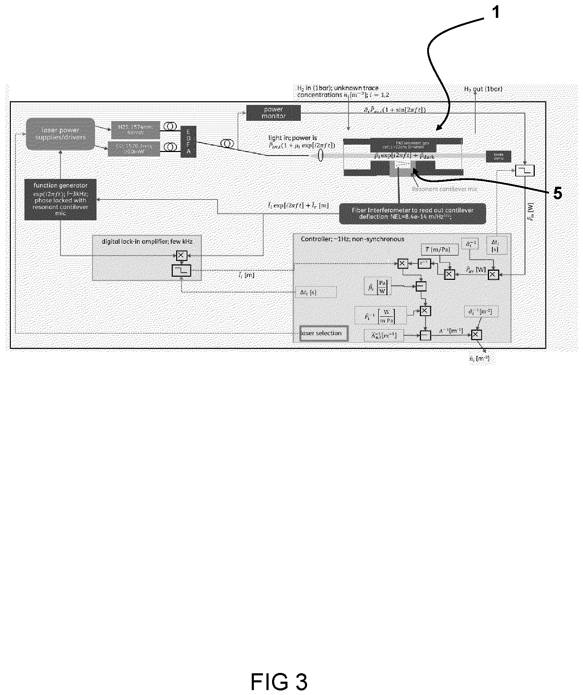

Fig. 3 shows a schematic diagram of an embodiment of a system configuration for a photo-acoustic spectroscopy (PAS) gas cell, designed to detect and analyze trace gases with high sensitivity and specificity. This system incorporates a series of interconnected components that work together to enhance the detection and measurement of gas species within a gas chamber, utilizing the principles of photo-acoustic effect. The resonance characteristics of the cantilever 5 can be adapted to a frequency of the excitation light.

In this illustration, the system is equipped with dedicated laser power supplies/drivers that energize lasers emitting at 1571 nm and 1537 nm wavelengths, optimized for the excitation of specific gas molecules with corresponding absorption wavelength. The configurations and laser wavelength may vary depending on the application and the at least one gas that is to be identified/characterized. This setup ensures precise control over the excitation light necessary for inducing the photo-acoustic effect within the gas sample.

In this example, a sealable gas chamber is shown, designed to contain the gas sample securely, preventing any leakage of gas or pressure, which is important for maintaining consistent measurement conditions.

Further, in this example, a power monitor is integrated to track and regulate the intensity of the excitation light directed into the gas chamber, maintaining optimal conditions for the photo-acoustic response.

Positioned at/within the gas chamber, the cantilever is configured to resonate in response to photo-acoustic signals generated by the gas under test. Coupled to the cantilever, this sensor is configured to detect deflections and strain via optical means, employing a fiber interferometer arrangement capable of interferometric measurements. This component allows to read or measure values indicative of the the deflections of the cantilever, translating physical movements into quantifiable optical signals e.g. the phase of the interference signal.

A lock-in amplifier is arranged along with a controller to precisely adjust the resonance frequency and modulation frequency of the excitation light. These adjustments can be important for maintaining the system's operation within the optimal sensitivity range. The system's output is characterized by the precise measurement of the cantilever's response to the photo-acoustic effects, facilitated by the measurement unit. This response is analyzed to identify the gas type and concentration within the chamber.

The primary factor restricting the system's ability to detect the smallest possible number of gas molecules may be the noise-equivalent length (NEL) of the interferometer. The NEL represents the smallest detectable change in length (or displacement) of the sensing arm of the interferometer caused by acoustic waves. If the interferometer's capability to measure minute length changes due to the acoustic response of the gas is the limiting factor, then improving the interferometer's sensitivity to these changes would directly enhance the system's overall ability to detect lower concentrations of absorbers.

Hence, the precision with which the interferometer can measure tiny changes in optical path length (due to the acoustic effects caused by the gas absorption of laser light) may fundamentally set the limit on the entire system's sensitivity. Therefore, significant efforts to enhance the PAS system's detection capabilities may be focused on reducing the noise levels and/or increasing the resolution of the interferometric measurements.

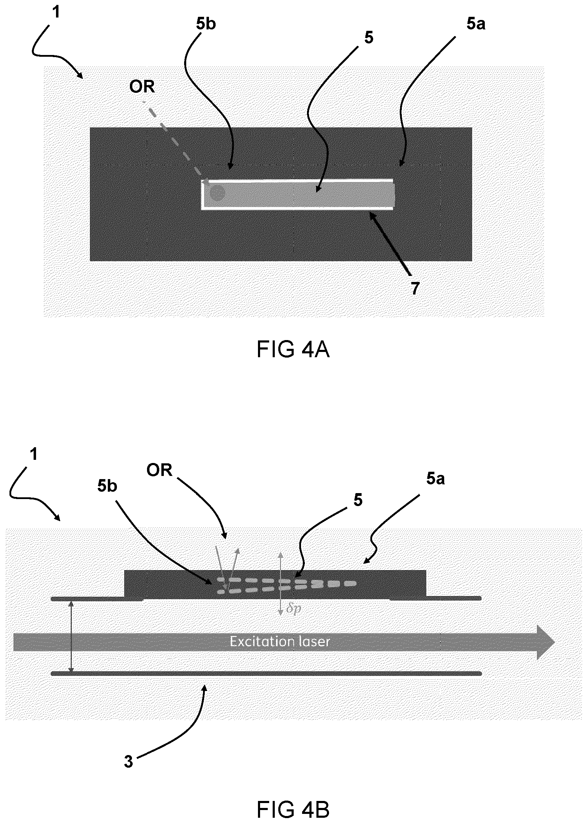

Fig. 4a, 4b show a schematic diagram of an embodiment of a photo-acoustic spectroscopy gas cell. In fig. 4a, a top view is shown of the cantilever at/within a photo-acoustic spectroscopy gas cell. The cantilever may have a relatively small thickness. In some examples, the thickness is smaller than 5 mm, preferably smaller than 4 mm, even more preferably smaller than 3 mm. In this example, the cantilever has a thickness of approximately 1mm, impacting the resonance properties.

The cantilever 5 is mounted at/within a gas chamber. In this example, the cantilever has a length of approximately 1.7cm, also impacting the resonance properties. The dimensions, shape, clamping, material properties of the cantilever are chosen such as to facilitate precise vibrational activities in response to photo-acoustic effects. Various configurations are possible.

The cantilever is securely anchored on a stable base which provides substantial support to prevent unwanted oscillations and vibrations. This base is considerably thicker or stiffer than the cantilever, ensuring stability and robustness of the setup.

It will be appreciated that the shown example is just one clamping configuration. Clamping can be performed in different ways depending on the specific application and desired resonance characteristics. In the illustrated example, the cantilever is clamped at one side 5b, allowing it to have a free end 5a that oscillates in response to acoustic stimuli. This configuration is particularly useful for improving sensitivity to photo-acoustic signals by enabling larger amplitude oscillations at the free end. However, alternative clamping methods or configurations can also be employed to suit different operational or environmental requirements. For instance, the cantilever may be clamped at both ends to create a doubly supported structure, which may offer different resonance frequencies or damping characteristics beneficial for certain types of gas detection scenarios. Furthermore, cantilevers may be designed with varying shapes, such as a T-shaped or V-shaped, which can influence the modal frequencies and the distribution of strain along the cantilever, thereby affecting its sensitivity and specificity in gas detection.

Furthermore, in the shown example, an optical system is employed for the optical readout OR of the tip deflection of the cantilever. This setup is crucial for accurately measuring the minute deflections caused by acoustic pressures within the gas cell, which are indicative of the gas's identity.

In this example, a relatively narrow air gap 7, for instance smaller than 3 mm, preferably smaller than 2 mm, even more preferably smaller than 1 mm, is maintained around the cantilever to minimize acoustic leakage, which can be important for maintaining the sensitivity and accuracy of the gas detection system.

In some examples, the air gap between cantilever 5 and the walls of gas chamber 3 is specifically set between 10 micrometers and 100 micrometers. An air gap below around 10 micrometers may lead to increased viscous drag, reducing the cantilever's quality factor (Q) and responsiveness. Conversely, an air gap above around 100 micrometers may result in acoustic leakage and diminished sound wave amplitude, impacting device sensitivity. This precise gap range improves the cantilever's acoustic responsiveness, which is important for effective gas identification.

Fig. 4b shows the cross-sectional side view of the example shown in fig. 4a. In this example, a cylindrical gas resonator is employed, however, other configurations are also possible. The exemplary cylindrical gas resonator may have various dimensions. For example, it may have a length more than 10 cm, or instance more than 15 cm. The gas chamber 3 of the gas cell 1 is designed to house the gas sample and facilitate acoustic resonance within the contained volume. It acts as the primary chamber where the photo-acoustic effect is generated through the interaction of the excitation laser with the gas sample.

As shown in fig. 4b, a thick directional arrow indicates the path of an excitation laser beam entering the gas resonator. This excitation laser beam provides the energy source necessary to induce the photo-acoustic effect in the gas sample, with a modulation frequency matched to the resonance frequency of the cantilever. Positioned at/within the gas resonator the cantilever is allowed to effectively and efficiently react to the photo-acoustic effect. It serves as a sensitive mechanical detector that resonates in response to acoustic pressures generated by the photo-acoustic effect. Since the resonance characteristics of the cantilever are tailored to match the modulation frequency of the excitation laser, the sensitivity and selectivity in gas identification is significantly enhanced.

Optical interferometry may be used to detect minute deflections of the cantilever tip caused by acoustic pressures, translating these cantilever tip deflection introduced interferometer path length change measurements into data used to identify the gas species based on its acoustic response.

In some examples, a quadrant photodetector is employed for optical readout of the resonant cantilever, which enables precise measurement of the tip's deflection and vibration. This technique involves using the quadrant photodetector to capture the light reflected from the cantilever's surface. Changes in the light pattern, caused by movements of the cantilever, are detected and analyzed to determine the displacement and mechanical vibrations with high accuracy.

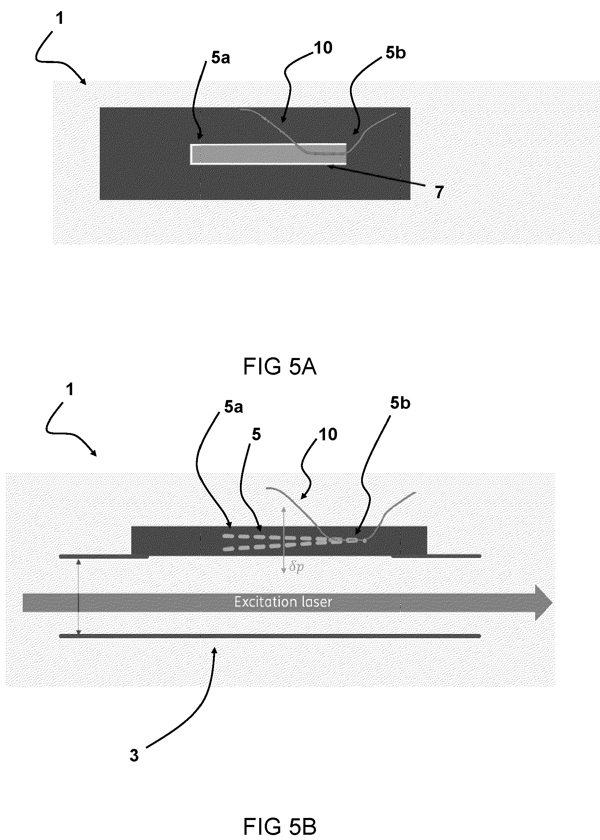

Fig. 5a, 5b show a schematic diagram of an embodiment of a photo-acoustic spectroscopy gas cell 1 incorporating a resonant cantilever 5 for enhancing gas detection sensitivity. The cantilever is mounted at/within the gas chamber. It is designed with a constricted dimension, having a thickness of approximately 1mm and a width slightly extending over a few millimeters. Other dimensions may also be employed. The dimensions of the cantilever are chosen to match desired resonance characteristics.

In this example, the measurement unit comprises an optical waveguide sensor 10 configured to measure the response of the cantilever to the acoustic pressure within the gas cell generated as a result of the photoacoustic effect. A surface-mounted optical waveguide sensor 10 is attached to the cantilever 5.

In this example, an optical readout mechanism is incorporated, utilizing fiber strain sensors (e.g., FBG, FS-FBG, fiber interferometer, fiber laser) attached to or near the cantilever. These sensors are crucial for detecting minute deformations or strains in the cantilever induced by acoustic pressures corresponding to the photo-acoustic effect within the gas cell.

In this example, the design includes a narrow air gap, less than 100 microns, preferably less than 80 microns, even more preferably less than 50 microns adjacent to the cantilever. This gap is configured to minimize acoustic leakage which could compromise the sensitivity of the device. Additionally, it is adequately sized to avoid excessive viscous damping that could dampen the resonant response of the cantilever.

Upon introduction of a gas sample and exposure to excitation light, the cantilever 5 resonates in response to the photo-acoustic effect generated within the chamber. The optical sensors measure this response, and the measurement unit interprets these readings to identify the gas based on its unique acoustic signature.

This exemplary configuration allows for high precision and sensitivity in gas detection, suitable for applications requiring detection of extremely low concentrations of contaminants. The robust and sealed design of the cantilever within the massive block ensures stable operation and minimal external interference.

In some examples, a pi-shifted Fiber Bragg Grating (FBG) is applied for surface strain measurement on the resonant cantilever microphone. This approach involves integrating a specially designed FBG that incorporates a phase shift at the midpoint, enhancing the sensitivity and resolution of strain measurements. When the cantilever experiences strain due to acoustic vibrations, the pi-shifted FBG transmits a wavelength-shifted light signal that is precisely correlated with the amount of strain. This technique allows for highly accurate monitoring of small deformations and stresses on the cantilever, crucial for detecting subtle changes in gas composition or concentration.

In some examples, other fiber based optical waveguide sensor types such as fiber interferometer and fiber Fabry-Perot cavity is applied for surface strain measurement of the resonant cantilever microphone.

In some examples, an area of a surface of the cantilever surface is covered with a ring resonator.

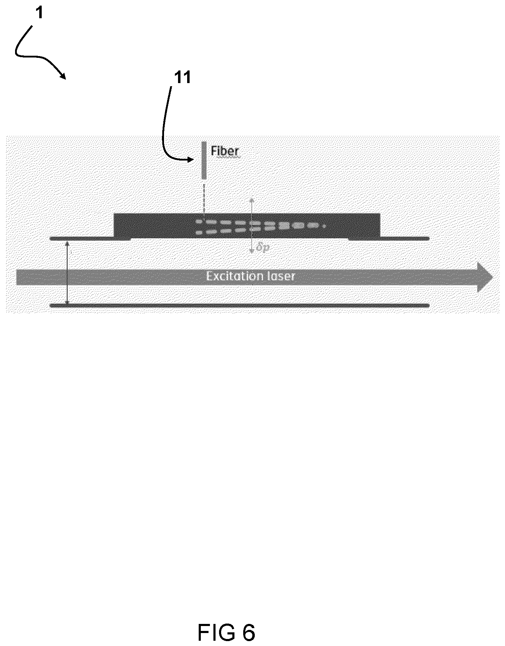

Fig. 6 shows a schematic diagram of an embodiment of a photo-acoustic spectroscopy gas cell 1. A coherent light source (e.g. excitation laser) directs light toward a cantilever within a gas chamber. The laser is used to induce a photo-acoustic effect by resonating the gas molecules at specific frequencies which correspond to the absorption frequencies of the target gases.

Positioned at/within the gas chamber, the cantilever 5 is finely tuned to respond to acoustic pressures created by the photo-acoustic effect. In some examples, an optical fiber 11 may be equipped with a reflector and lens system positioned to collect light both from the reflection on the cantilever 5 and the light reflected by an additional reflector. The system may measure changes in the optical path length caused by the deflection of the cantilever, correlating these changes to variations in gas concentration.

The optical fiber 11 can be used to transmit light from a source to the measurement site and back to a detection system. In this setup, the fiber is specifically designed to handle not just the transmission of light but also its effective manipulation through integrated optical components like lenses and reflectors.

The returned light, which now contains phase and amplitude changes due to interactions with the vibrating cantilever, travels back through the optical fiber to an interferometric setup. Here, it interferes with a reference beam. The phase changes of the interference signal depend on the path length changes between the fiber and the cantilever introduced by the cantilever's movements, which are in turn caused by the acoustic effects within the gas chamber. By analyzing these interference patterns, precise measurements of cantilever movements can be deduced, allowing for accurate detection and quantification of the gas species present.

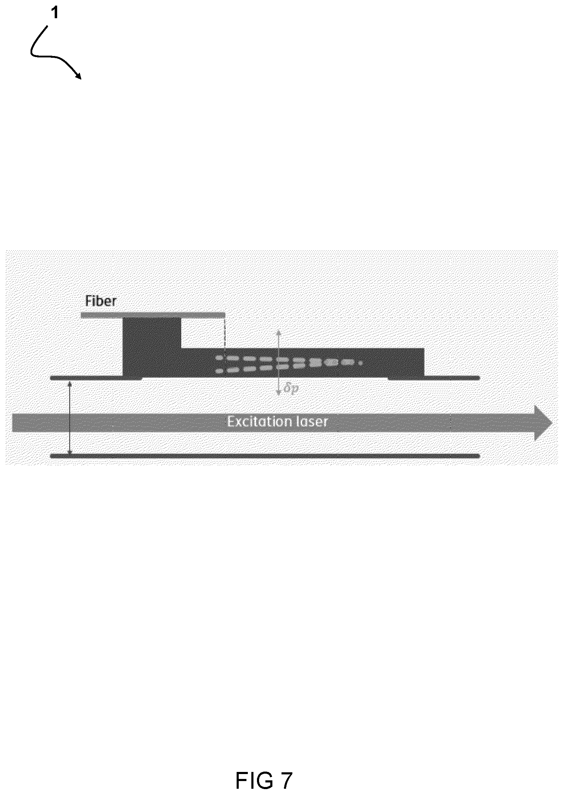

Fig. 7 shows a schematic diagram of an embodiment of a photo-acoustic spectroscopy gas cell 1, depicting exemplary components involved in measuring the response of a cantilever to photo-acoustic effects induced within a gas chamber. The frequency of the excitation laser beam is modulated to resonate with specific gas species within the chamber, inducing a photo-acoustic effect.

In this example, an optical system, including an optical fiber 11 integrated with a reflector and lens, projects light towards the cantilever. This system can direct and focus the the measurement beam accurately onto the cantilever 5. The cantilever 5 is depicted as a flexible beam with one end fixed. It is designed to resonate in response to the photo-acoustic effect generated by the interaction of the gas with the excitation laser.

The cantilever's resonance characteristics are tailored to match the modulation frequency of the excitation light, enhancing sensitivity and specificity in gas identification.

Light reflected back from the cantilever 5 and the light re-emitted by the fiber reflector are used for interferometric measurements. In this exemplary setup, a deflection mirror at the end of the fiber is arranged that is configured to steer the light beam appropriately.

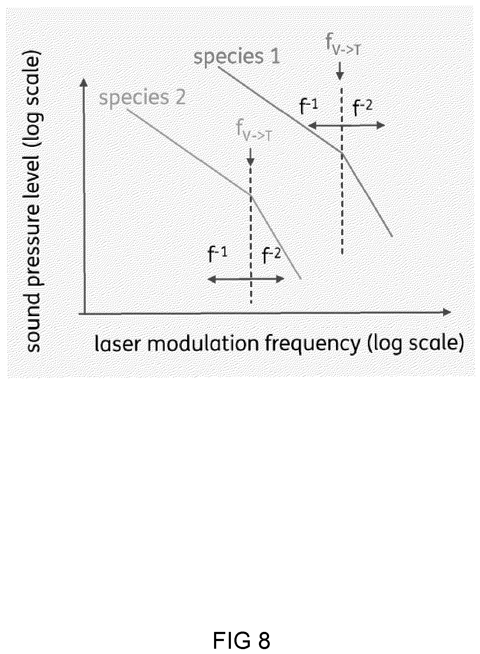

Fig. 8 shows a schematic diagram of a graph illustrating frequency-selective discrimination of gases in photoacoustic spectroscopy. A graphical representation of the frequency-dependent photoacoustic response of two distinct gas species within a photoacoustic spectroscopy system, is shown, utilizing laser modulation frequency on a logarithmic scale as the x-axis, and sound pressure level on a logarithmic scale as the y-axis. The graph depicts two distinct curves, one for each gas species, labeled as species 1 and species 2.

Unique molecular characteristics of different gases, particularly their vibration-translation (VT) relaxation times, can be exploited to achieve selective and precise gas detection in photoacoustic spectroscopy (PAS). VT relaxation time, the period it takes for absorbed energy by a gas molecule to translate into an acoustic pressure wave, is an important parameter in PAS. This molecular property varies between different gases and provides a distinctive signature that can be exploited for accurate identification. Traditional PAS systems generally operate at a single acoustic frequency, linked to the laser modulation frequency, which limits their ability to differentiate between gases with similar absorption peaks. By employing a broad-band acoustic excitation approach, the complex frequency response can be measured across a range of frequencies. This advantageously enables to observe the point where the response changes, corresponding to the VT relaxation time of each gas. To enhance this differentiation, another trace species like water or SF6, which couples efficiently, can be added to shift the VT relaxation frequency. This approach not only broadens the capability of PAS to detect and discriminate between multiple trace gases using a single optical wavelength but also significantly enhances the sensitivity and selectivity of the system, making it adept at identifying low concentrations of contaminants crucial in sensitive applications.

Species 1 shows a characteristic response peak at modulation frequency f_VT, indicating the vibration-translation relaxation frequency specific to this species. The response then declines as the frequency moves away from this peak. Species 2, which also exhibits a peak at its specific vibration-translation relaxation frequency f_VT, albeit at a different frequency value compared to Species 1, demonstrating the unique acoustic fingerprint of each gas based on its molecular properties.

For each species, distinct frequency markers f1 and f2 are shown. These markers define the breadth of the measurable photoacoustic effect around its respective f_VT.

In some examples, to enhance the detection and identification of multiple gas species, the system may utilize different modulation frequencies in combination with a multiple cantilever configuration. In such embodiments, the excitation light source is configured to operate at various modulation frequencies, each tailored to correspond with the specific absorption characteristics of different target gases. Correspondingly, multiple cantilevers are mounted within the gas chamber, each cantilever having resonance characteristics adapted to resonate at one of the selected modulation frequencies. By concurrently or sequentially modulating the excitation light at these different frequencies and monitoring the responses of the respective cantilevers, the system can simultaneously detect and discriminate between multiple gases present in the sample. This approach leverages the resonant amplification provided by each cantilever at its designated frequency, thereby enhancing sensitivity and selectivity across a broader range of gas species. The integration of multiple cantilevers tuned to different frequencies allows for a more comprehensive analysis of complex gas mixtures, improving the system's capability to identify gases that may exhibit overlapping absorption spectra or require detection at varying modulation frequencies.

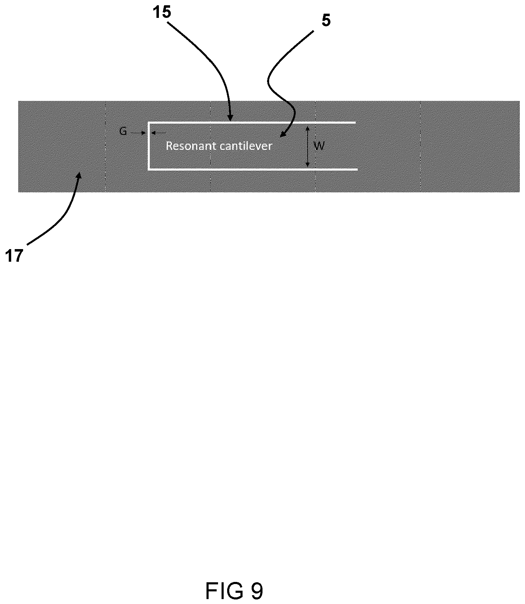

Fig. 9 shows a schematic diagram of an embodiment of a cantilever 5.

In this example, the cantilever 5 is formed through a process involving a cut-out 15 from a surface or body structure 17. The cut-out 15 creates a preferred gap, denoted as gap G, which may be preferably configured to be between 10 and 100 micrometers. The precise dimensions of this gap G can be important for enhancing the performance of the cantilever. By employing cut-outs or recesses 15 in the body structure 17, the cantilever 5 can be tailored to achieve an accurately arranged narrow gap.

In this example, the cantilever has an exemplary width of 3 mm. However, various other dimensions and configurations may be used that also impacting the resonance properties (resonance frequency, resonance mode, etc.). The dimensions, shape, clamping, material properties of the cantilever are chosen such as to facilitate precise vibrational activities in response to photo-acoustic effects. Various other configurations are possible.

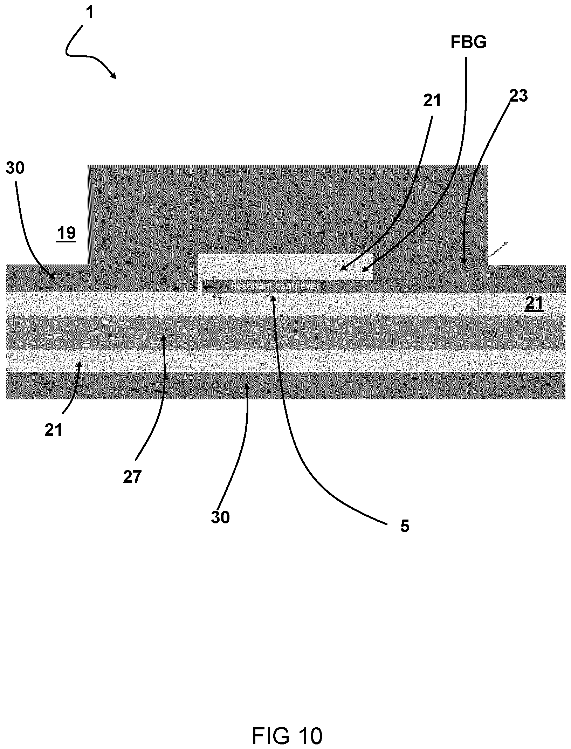

Fig. 10 shows a schematic diagram of an embodiment of a photo-acoustic spectroscopy gas cell 1. This figure provides a cross-sectional view of an exemplary gas cell.

The gas cell may be surrounded by an external environment 19 (e.g. under atmospheric conditions). The external environment 19 may be isolated from the internal gas chamber to maintain controlled testing conditions.

Within the gas cell 1, a region 21 may accommodate the gas/fluid under test. This can be the region 21 within the gas cell where the gas sample is held. This compartment can be configured to contain the gas during the excitation and detection phases of the photo-acoustic spectroscopy process.

The resonant cantilever 5 is arranged such that a back volume 23 is formed, that is in fluid communication with the region 21 through a small gap opening, the gap G being preferably between 10 and 100 micrometer.

In this example, the cantilever has an exemplary length L of around 17 mm and thickness T of around 1 mm. The gap G is around 50 micrometer. Various other dimensions and configurations can be used to affect resonance properties like frequency and mode. The cantilever's dimensions, shape, clamping, and material properties are selected to enable precise vibrations in response to photo-acoustic effects. In this example, the gas cell has a width CW of around 4 mm. However, other dimensions and/or configurations may also be employed.

A mechanically sensitive element that resonates in response to acoustic waves generated by the photo-acoustic effect when the gas absorbs modulated laser light. The cantilever's natural frequency is matched or tuned to the modulation frequency of the excitation light to maximize resonance and sensitivity.

A fiber feedthrough 23 is arranged to allow optical fibers to enter the gas cell without compromising the integrity of the gas chamber. The fiber feedthrough 23 may provide an optical connection between a fiber optic interrogator and a Fiber Bragg Grating (FBG), that can be located at an end region of the fiber feedthrough.

The FBG sensor can be attached to the cantilever in order to detect changes in strain as the cantilever vibrates. The FBG alters its reflective wavelength in response to these strains, providing a precise measure of the cantilever's deflections, which are analyzed to identify the type of gas present.

The fiber feedthrough 23 pathway allows the transmission of signals or data from the FBG to an external device such as an interrogator. This device analyzes the wavelength shifts in the FBG to determine the gas's identity based on its acoustic signature.

The path and direction of the modulated laser light 27 used to excite the gas molecules within the gas chamber, leading to the generation of acoustic waves that stimulate the cantilever, is also shown.

Further, the gas cell 1 has walls 30 surrounding components. The walls 30 provide structural boundaries of the gas cell 1, which can be designed to provide a housing and contain the gas sample and the acoustic effects.

By tuning the resonant frequency of the cantilever to match the modulation frequency of the laser light, and employing FBGs to measure the resulting vibrations, the system achieves high sensitivity and specificity in identifying different gas species. This setup is ideal for applications requiring precise trace gas analysis in various environmental and industrial contexts.

It will be appreciated that the configurations and dimensions illustrated herein are exemplary and serve primarily to demonstrate the functionality and effectiveness of the integrated optical waveguide sensors in a resonant cantilever setup. It should be understood that these specifications can be adjusted according to specific requirements. Various modifications to the dimensions, materials, and arrangement of components are possible and are fully envisaged within the scope of this invention, allowing for enhanced adaptability and optimization in different applications.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A photo-acoustic spectroscopy gas cell comprising:
a gas chamber configured to contain a gas sample;
a light receiving portion configured to receive excitation light at a modulation frequency that induces a photo-acoustic effect in the gas within the gas chamber;
a cantilever mounted at/within the gas chamber, wherein resonance characteristics of the cantilever are adapted to allow it to resonate in response to photo-acoustic excitation within the gas cell; and
a measurement unit configured to determine the identification of the gas based on a response of the cantilever to the photo-acoustic effect.

2. The photo-acoustic spectroscopy gas cell of claim 1, wherein the cantilever is configured such that a resonance frequency thereof matches a modulation frequency of the excitation light.

3. The photo-acoustic spectroscopy gas cell of claim 1 or 2, wherein the measurement unit comprises an optical waveguide sensor configured to measure the response of the cantilever to the acoustic pressure within the gas cell generated as a result of the photoacoustic effect.

4. The photo-acoustic spectroscopy gas cell of any one of the preceding claims, wherein a surface-mounted optical waveguide sensor is attached to the cantilever.

5. The photo-acoustic spectroscopy gas cell of claim 4, wherein the optical waveguide sensor comprises at least one of: a fiber grating unit, a ring resonator unit, a Fabry-Perot cavity, or a fiber laser unit, configured to detect the response of the cantilever by measuring strain or deformation induced changes in optical properties.

6. The photo-acoustic spectroscopy gas cell of any one of the preceding claims, wherein the optical waveguide sensor is configured to measure changes in an optical path length.

7. The photo-acoustic spectroscopy gas cell of any one of the preceding claims, wherein the optical waveguide sensor is configured to measure its length change interferometrically.

8. The photo-acoustic spectroscopy gas cell of any one of the preceding claims, wherein the optical waveguide sensor includes reflectors at both ends, and the system comprises an interferometer configured to measure changes in an interference pattern resulting from the reflections, correlating these changes with variations in cantilever strain or deformation.

9. The photo-acoustic spectroscopy gas cell of any one of the preceding claims, wherein the optical waveguide sensor includes a partial reflector at the end to transmit the light for the optical measurement to the cantilever which acts as a second reflector, wherein light reflected by the cantilever is recoupled into the waveguide sensor for interferometrical measurement.

10. The photo-acoustic spectroscopy gas cell of any one of the preceding claims, wherein the cantilever is clamped within the gas chamber without active actuation and/or drive mechanisms.

11. The photo-acoustic spectroscopy gas cell of any one of the preceding claims 1-9, wherein the cantilever is actively driven at one or more frequencies, and wherein a value indicative of or coupled to the cantilever's dynamic tip deflection, induced by dynamic pressure variations within the gas chamber, is monitored.

12. The photo-acoustic spectroscopy gas cell of claim 11, wherein the cantilever is operated at or close to a resonance frequency thereof.

13. The photo-acoustic spectroscopy gas cell of any one of the preceding claims, wherein the cantilever is configured to operate in a resonance mode, in which its physical characteristics, including shapes, material properties, clamping and/or dimensions, are tailored to allow it to resonate at frequencies that match or are closely aligned with the frequency of the excitation light for photo-acoustic excitation.

14. The photo-acoustic spectroscopy gas cell of any one of the preceding claims, wherein the cantilever is integrated and clamped within an interior space of the gas chamber, and wherein the gas chamber is sealable in order to prevent gas or pressure leakage.

15. A method for identifying a gas, comprising:
introducing a gas sample into a gas chamber of a photo-acoustic spectroscopy gas cell;
directing excitation light at a modulation frequency into the gas chamber, wherein the modulation frequency of the excitation light is selected to induce a photo-acoustic effect in the gas;
monitoring a response of a cantilever mounted at/within the gas chamber, wherein the resonance characteristics of the cantilever are adapted to allow it to resonate in response to photo-acoustic excitation within the gas cell;
measuring the response of the cantilever to the photo-acoustic effect using a measurement unit; and
determining the identification of the gas based on the measured response of the cantilever.
